# EUROPÄISCHE PATENTSCHRIFT

(11) **EP 2 753 167 B1**
(45) Veröffentlichungstag und Bekanntmachung des Hinweises auf die Patenterteilung: **18.11.2015**
(21) Anmeldenummer: 12766879.6
(22) Anmeldetag: 04.09.2012
(51) Int. Cl.: A01G 9/02

(54) **PFLANZTOPF-ANORDNUNG MIT EINEM ÜBERTOPF UND EINEM IN DEN ÜBERTOPF EINSETZBAREN UND HERAUSNEHMBAREN EINSATZTOPF**
PLANT POT ARRANGEMENT WITH AN OUTER POT AND AN INSERT POT WHICH CAN BE INSERTED INTO AND REMOVED FROM THE OUTER POT
AGENCEMENT DE POT DE FLEUR COMPRENANT UN SURPOT ET UN POT À INSÉRER QUI PEUT ÊTRE INSÉRÉ DANS LE SURPOT ET RETIRÉ DE CELUI-CI

(30) Priorität: 05.09.2011 EP 11180023
(43) Veröffentlichungstag der Anmeldung: 16.07.2014
(73) Patentinhaber: Plastia s.r.o., 14100 Praha 4 (CZ)
(72) Erfinder: NOVOTNY, Stanislav, 14100 Praha 4 (CZ)
(74) Vertreter: Jeck, Anton
(86) Internationale Anmeldenummer: PCT/EP2012/003685
(87) Internationale Veröffentlichungsnummer: WO 2013/034274

(56) Entgegenhaltungen:
- DE-A1- 19 515 700
- US-A1- 2010 077 660
- US-B1- 7 886 484

## Beschreibung

Die Erfindung betrifft eine Pflanz-Anordnung mit einem Übertopf und einem in den Übertopf einsetzbaren und herausnehmbaren Einsatztopf nach dem Oberbegriff des Anspruches 1.

Aus der US 7 886 484 B1 ist eine Pflanztopf-Anordnung bekannt, bei der der Pflanztopf im oberen Außenbereich einen angeformten umlaufenden Steg aufweist, auf dem ein rahmenartiges Teil auflegbar ist. Dieses Teil überragt den Pflanztopf und bildet Auflageflächen für ein ringförmiges Abschlussteil, das sich auf der ringförmigen Oberkante des Pflanztopfes und einem Außensteg des rahmenartigen Teils abstützt. Damit ist an der Oberseite des Pflanztopfes ein geschlossener abgerundeter Abschluss erreicht, der eine robuste Konstruktion darstellt. Das Einsetzen und Herausnehmen eines Einsatztopfes in den Pflanztopf ist bei dieser bekannten Pflanztopf-Anordnung nicht vorgesehen.

Die US 2010/077660 A1 zeigt einen Pflanztopf, der an der Oberseite mit einem umlaufenden, abstehenden Rand versehen ist, auf dem sich der Rand eines topfartigen Einsatzes mit anderem Rand abstützt. Dieser Einsatz hat eine geringe Höhe und ist nach seiner Herausnahme aus dem Pflanztopf als Untersetzer für den Pflanztopf zu verwenden. Zudem kann der Einsatz verschieden groß ausgelegt und selbst als Pflanztopf verwendet werden.

Schließlich zeigt die DE 195 15 700 A1 eine Einrichtung zur Aufnahme von Pflanzenerde, die eine rechteckige Aufnahme aus Holz aufweist. Die Seitenwände dieser Holzkiste können auf der Innenseite oder Außenseite längsgerichtete Außenstege aufweisen, auf denen sich ein Plastikeinsatz mit Außenstegen oder Innenstegen abstützt. Der aus Kunststoff bestehende Pflanzeinsatz kann sich auch auf den Oberseiten der Holzkiste abstützen. Anstelle der Auflagestege können die Seitenwände der Holzkiste auch eingearbeitete Auflageaufnahmen aufweisen. Der Einsatz hat in der Regel eine Höhe, die kleiner ist als die Höhe der Holzkiste. Bei dieser Einrichtung ist die Gefahr einer Beschädigung des Kunststoffeinsatzes und damit einer nachfolgenden Verrottung des Holzes sowie das Auftreten von Staunässe vermieden. Vorrichtungen zur leichten Handhabung des Kunststoffeinsatzes beim Herausnehmen aus der Holzkiste sind auch bei dieser bekannten Einrichtung nicht vorhanden.

Eine Pflanztopf-Anordnung mit Pflanztopf und Einsatztopf der eingangs erwähnten Art ist aus der EP 1 790 212 B1 bekannt. Bei dieser bekannten Pflanztopf-Anordnung ist der Einsatztopf im Bereich des oberen Behälterrandes mit diagonal angeordneten Griffen versehen, die in Griff-Führungen geführt und in eine mit dem Übertopf bündige Einführstellung und in eine am Übertopf vorstehende Ausziehstellung einstellbar sind. Die Griffe können in der Ausziehstellung gefasst und der Einsatztopf aus dem Übertopf herausgenommen werden. Auch das Einsetzen des Einsatztopfes in den Übertopf geschieht mit den in die Ausziehstellung gebrachten Griffen. Danach werden die Griffe in die Einführstellung zurückgestellt, damit die Pflanztopf-Anordnung ohne die abstehenden Griffe einen optisch und gestalterisch guten Eindruck vermitteln.

Dies setzt eine komplizierte konstruktive Ausgestaltung des Einsatztopfes und zusätzliche Handgriffe beim Einsetzen und Herausnehmen des Einsatztopfes voraus.

Es ist Aufgabe der Erfindung, eine Pflanztopf-Anordnung zu entwickeln, die ohne verstellbare Griffe das Einsetzen und Herausnehmen des Einsatztopfes ermöglicht und dabei nach dem Einsetzen des Einsatztopfes in den Übertopf zusätzliche Handgriffe vermeidet, wobei sich nach dem Einsetzen des Einsatztopfes in den Übertopf automatisch eine optisch ansprechende Konstruktion ergibt.

Die gestellte Aufgabe wird durch die Merkmale des Anspruches 1 gelöst.

Dabei weist der Übertopf im Bereich der Oberseite Griffausnehmungen auf, die diagonal angeordnet sind. Der Einsatztopf ist in einen Tragrahmen eingehängt. Der Einsatztopf steht nach dem Einbringen in den Übertopf auf dem Boden des Übertopfes auf, wobei die Einhängestellung des Einsatztopfes durch Absenken des Tragrahmens in eine untere Stellung aufhebbar und der Tragrahmen auf der Oberseite des Übertopfes ablegbar ist. Der Tragrahmen ist über die Griffausnehmungen des Übertopfes fassbar. Nach dem Bringen des Tragrahmens in die Einhängestellung ist der Einsatztopf aus dem Übertopf herausnehmbar.

Mit dem Tragrahmen kann der Einsatztopf bequem in den Übertopf eingesetzt werden. Beim Erreichen der Einsatzstellung des Einsatztopfes kann der Tragrahmen die Einhängestellung verlassen. Er kann abgesenkt und auf die Oberseite des Übertopfes abgelegt werden. Dabei kann der Tragrahmen an beliebigen Stellen gehalten werden, ohne dass die Hände zwischen dem Tragrahmen und der Oberseite des Übertopfes eingeklemmt werden. Nach dem Freigeben des Tragrahmens durch die Hände fällt der Tragrahmen aufgrund seines Eigengewichtes auf die Oberseite des

Übertopfes und stellt dadurch automatisch den optischen Eindruck der Pflanztopf-Anordnung her.

Weitere vorteilhafte Ausgestaltungen der Pflanztopf-Anordnung sind den Unteransprüchen zu entnehmen.

Damit der Tragrahmen im Bereich der Oberseite des Einsatztopfes festgelegt werden kann, sieht eine Weiterbildung vor, dass der Tragrahmen durch einen Abdeckhalterahmen, der von der Oberseite des Einsatztopfes mit dem Tragrahmen verbindbar ist, im Bereich der Oberseite des Einsatztopfes begrenzt vertikal verstellbar ist.

Auf diese Weise ist die Einheit aus Tragrahmen und Abdeckhalterahmen am Einsatztopf festgelegt, was die Bedienung der Pflanztopf-Anordnung erleichtert.

Die vertikale Verstellbewegung des Tragrahmens mit dem Abdeckhalterahmen ist dabei auf mindestens die Abmessung einer zwischen dieser Einheit und der Oberseite des Übertopfes eingeführten Hand begrenzt.

Der Übertopf, der Einsatztopf, der Tragrahmen und der Abdeckhalterahmen weisen runden, quadratischen, rechteckförmigen oder ovalen Querschnitt auf, wobei die einzelnen Querschnitte aufeinander abgestimmt sind.

Der Einsatztopf weist am Boden angeformte Abstandshalter auf, die auf der Innenseite des Bodens des Übertopfes aufstehen und die Einstellposition des Einsatztopfes im Übertopf festlegen.

Der Tragrahmen weist eine nach oben offene Nut auf, in die ein nach unten weisender Steg des Einsatztopfes ragt und dass durch Anschlag des Steges in der Nut die Einhängestellung des Einsatztopfes im Tragrahmen mit dem Abdeckhalterahmen festgelegt ist.

In der Einhängestellung ist der Tragrahmen mit dem Abdeckhalterahmen in der oberen Stellung des Tragrahmens mit dem Abdeckhalterahmen im Bezug zur Oberseite des Einsatztopfes festgelegt.

Der Tragrahmen mit dem Abdeckhalterahmen ist bei auf dem Boden des Übertopfes aufgestelltem Einsatztopf in die untere Stellung im Bezug auf den Einsatztopf absenkbar, wobei der Tragrahmen und/oder der Abdeckhalterahmen sich auf der oberen Stirnseite des Übertopfes oder auf einem Innenabsatz des Einsatztopfes abstützt.

Der Abdeckhalterahmen, der die Oberseite der Pflanztopf-Anordnung abdeckt und den Halt der Einheit aus Tragrahmen und Abdeckhalterahmen am Einsatztopf festlegt, ist auf den Tragrahmen aufgerastet.

Die Erfindung wird anhand eines in den Zeichnungen dargestellten Ausführungsbeispiels näher erläutert. Es zeigen:
- Fig. 1: die Seitenansicht der Pflanztopf-Anordnung, wobei der obere Bereich im Schnitt dargestellt ist,
- Fig. 2: einen Teilschnitt entlang der Linie II-II der Fig. 1,
- Fig. 3: den in Fig. 2 mit dem Kreis III gekennzeichneten Bereich der Pflanztopf-Anordnung in der eingesetzten Stellung des Einsatztopfes und
- Fig. 4: die der Fig. 3 entsprechenden Bauteile in der Einhängestellung des Einsatztopfes und der Hand beim Erreichen der Einstellstellung des Einsatztopfes im Übertopf.

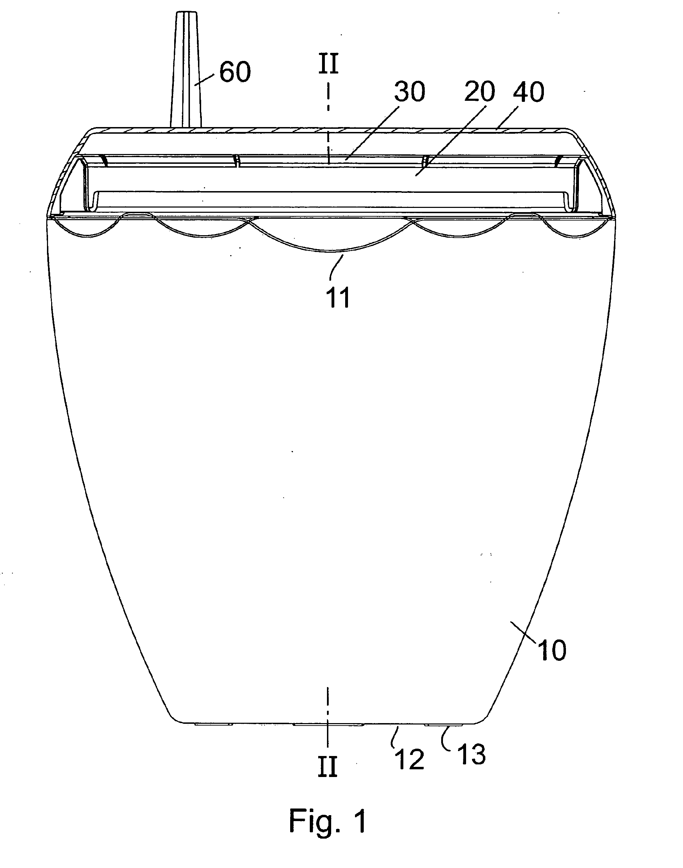

Aus Fig. 1 ist eine Pflanztopf-Anordnung mit rundem Querschnitt des Übertopfes 10, des Einsatztopfes 20, des Tragrahmens 30 und des Abdeckhalterahmens 40 zu sehen. Dabei ist im Bereich der Oberseite die Ansicht im Teilschnitt dargestellt, um die einzelnen Bauteile kennzeichnen zu können. Der Boden 12 des Übertopfes 10 trägt außen angeformte Stellplättchen 13. Mit dem Bezugszeichen 11 ist eine der diametral angeordneten Griffausnehmungen bezeichnet, die in der Oberseite des Übertopfes 10 nach oben offen sind.

Ein Füllstandsanzeiger 60 ragt an der Oberseite der Pflanztopf-Anordnung heraus, der in einer Führung des Einsatztopfes 10 bis in den Bereich zwischen dem Boden 12 des Übertopfes 10 und dem Boden 21 des Einsatztopfes 20 ragt und den Flüssigkeitsstand anzeigt.

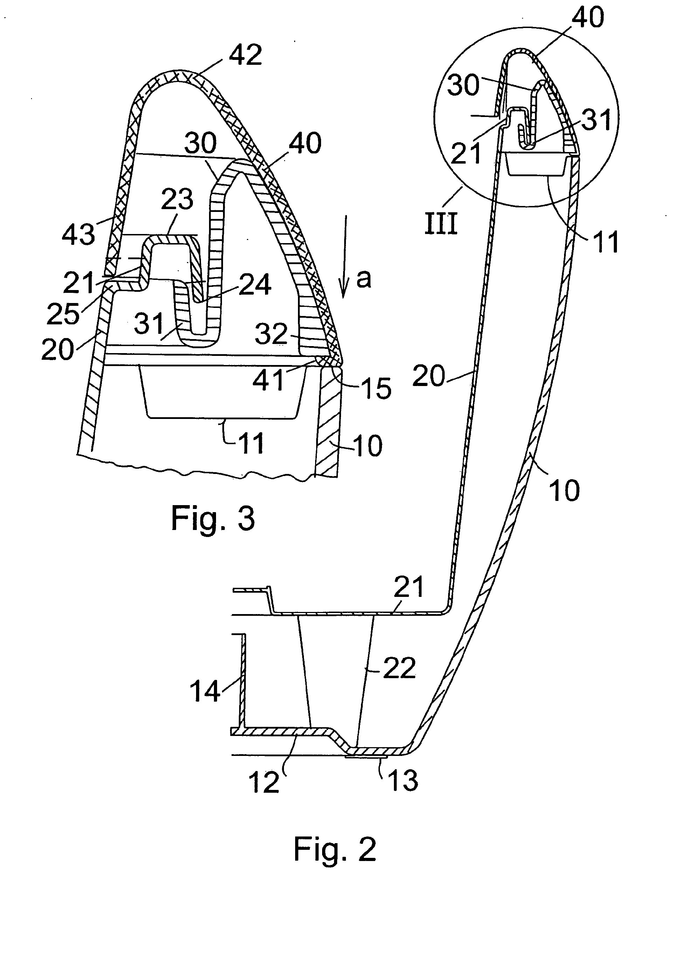

Wie Fig. 2 zeigt, steht der Einsatztopf 20 über am Boden 21 angeformte Abstandshalter 22 auf der Innenseite des Bodens 12 des Übertopfes 10 auf. Der in Fig. 2 durch den Kreis III gekennzeichnete Bereich ist in Fig. 3 vergrößert wiedergegeben. Dabei ist im Bereich der Oberseite des Einsatztopfes 10 eine Einheit aus Tragrahmen 30 und Abdeckhalterahmen 40 begrenzt vertikal verstellbar festgelegt. Der Tragrahmen 30 ist von unten auf den Einsatztopf 20 aufgeschoben, während der Abdeckhalterahmen 40 von oben her mit dem Tragrahmen 30 verbunden, vorzugsweise verrastet ist. Der Einsatztopf 20 weist einen Innenabsatz 25 auf, der über einen vertikalen Schenkel 21 und einen horizontalen Schenkel 23 in einen nach unten gerichteten Steg 24 übergeht. Der Steg 24 ist in eine nach oben offene Nut 31 des Tragrahmens 30 eingeführt. Der Tragrahmen 30 ist mit dem Außenschenkel 32 mit dem Außenschenkel 42 des Abdeckhalterahmens 40 verbunden, vorzugsweise verrastet, wie die Rastelemente 41 zeigen. Der Innenschenkel 43 des Abdeckhalterahmens 40 stützt sich auf dem Innenabsatz 25 des Einsatztopfes 20 ab. Diese untere Stellung der Bauteile stellt sich automatisch ein, wenn der Einsatztopf 20 im Übertopf 10 abgestellt ist. Aus der Fig. 3 ist auch ersichtlich, dass die Einhängestellung des Einsatztopfes 20 im Tragrahmen 30 aufgehoben ist. Wie der Pfeil a andeutet, ist die Stellung nach Fig. 3 durch das Eigengewicht der Einheit aus Tragrahmen 30 und Abdeckhalterahmen 40 bedingt und stellt sich nach dem Erreichen der Einstellung des Einsatztopfes 20 im Übertopf 10 automatisch ein.

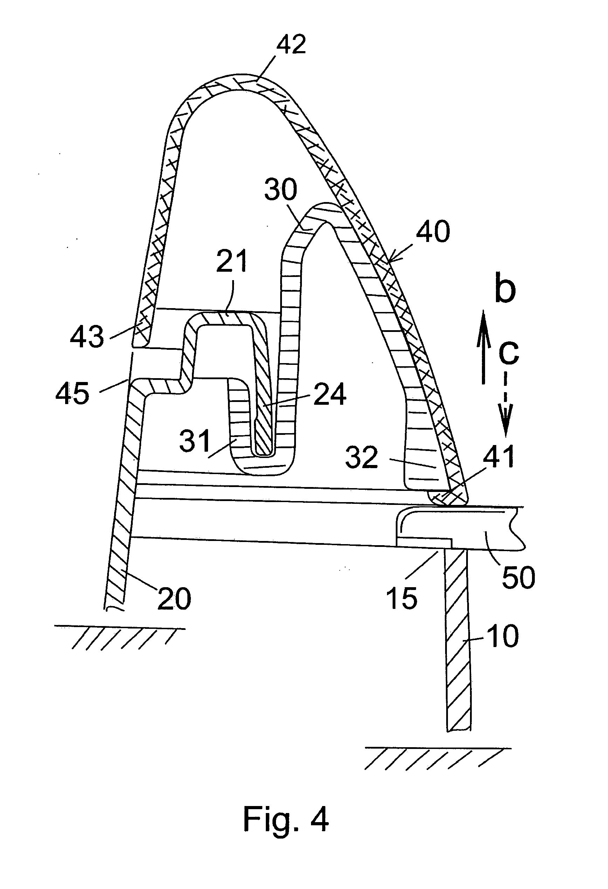

Anhand der Fig. 4 lässt sich zeigen, dass die Einhängestellung des Einsatztopfes 20 in der Einheit aus Tragrahmen 30 und Abdeckhalterahmen 40 in der oberen Verstellung der Einheit im Bezug zum Einsatztopf 20 gegeben ist. Die entsprechende Stellung von Einsatztopf 20 und Übertopf 10 ist dabei vorgegeben. Dies bedeutet, dass die Einheit aus Einsatztopf 20 und Übertopf 10 das Fassen der Einheit an beliebiger Stelle zulässt, ohne die Hand 50 zwischen dem Außenschenkel 41 des Abdeckhalterahmens 40 und der Oberseite 15 des Übertopfes 10 einzuklemmen. Die in Richtung des Pfeils 6 verstellte Einheit aus Tragrahmen 30 und Abdeckhalterahmen 40 lässt dabei ausreichenden Platz für die die Einheit fassende hand 50. Gibt die Hand 50 die Einheit aus Tragrahme 30 und Abdeckhalterahmen 40 frei, dann senkt sich die Einheit nach unten ab, wie der Pfeil c andeutet, bis sie schließlich die in Fig. 3 gezeigte untere Stellung einnimmt. Dies erfolgt durch das Eigengewicht der Einheit automatisch.

In der Stellung nach Fig. 3 bleiben die nach oben offenen Griffausnehmungen 11 zum Einführen der Hände frei. Die Einheit wird angehoben und nimmt die Einhängestellung nach Fig. 4 ein. Mit der Einheit aus Tragrahmen 30 und Abdeckhalterahmen 40 kann der Einsatztopf 20 nach Einstellung in die Einhängestellung aus dem Übertopf 10 herausgenommen werden.

Der Übertopf 10 kann eine größere Wandstärke aufweisen als der Einsatz 20, der Tragrahmen 30 und der Abdeckrahmen 40.

## Patentansprüche

1. Pflanztopf-Anordnung mit einem Übertopf (10) und einem in den Übertopf (10) einsetzbaren und aus dem Übertopf (10) herausnehmbaren Einsatztopf (20) zur Aufnahme einer Pflanze mit Pflanzenerde, wobei der Übertopf (10) und der Einsatztopf (20) an der Oberseite offen ausgebildet sind,
wobei der Übertopf (10) im Bereich der Oberseite Griffausnehmungen (11) aufweist, **dadurch gekennzeichnet,**
**dass** der Einsatztopf (20) in einen Tragrahmen (30) einhängbar ist,
**dass** der Einsatztopf (20) nach dem Einsetzen in den Übertopf (10) auf dem Boden (12) des Übertopfes (10) aufsteht, wobei die Einhängestellung des Einsatztopfes (10) durch Absenken des Tragrahmens (30) in eine untere Stellung am Einsatztopf (20) aufhebbar und der Tragrahmen (30) auf der Oberseite des Übertopfes (10) ablegbar ist, und
**dass** der Tragrahmen (30) über die Griffausnehmungen (11) des Übertopfes (10) fassbar und der Einsatztopf (20) nach dem Bringen des Tragrahmens (30) in die Einhängestellung aus dem Übertopf (10) herausnehmbar ist.

2. Pflanztopf-Anordnung nach Anspruch 1,
**dadurch gekennzeichnet,**
**dass** der Tragrahmen (30) durch einen Abdeckhalterahmen (40), der von der Oberseite des Einsatztopfes (20) mit dem Tragrahmen (30) verbindbar ist, im Bereich der Oberseite des Einsatztopfes (20) begrenzt vertikal verstellbar ist.

3. Pflanztopf-Anordnung nach Anspruch 2,
**dadurch gekennzeichnet,**
**dass** die vertikale Verstellbewegung des Tragrahmens (30) mit dem Abdeckhalterahmen (40) auf mindestens die Abmessung einer zwischen dieser Einheit und der Oberseite des Übertopfes (10) eingeführten Hand (50) begrenzt ist.

4. Pflanztopf-Anordnung nach einem der Ansprüche 1 bis 3,
**dadurch gekennzeichnet,**
**dass** der Übertopf (10), der Einsatztopf (20), der Tragrahmen (30) und der Abdeckhalterahmen (40) runden, quadratischen, rechteckförmigen oder ovalen Querschnitt aufweisen, wobei die einzelnen Querschnitte aufeinander abgestimmt sind.

5. Pflanztopf-Anordnung nach einem der Ansprüche 1 bis 4,
**dadurch gekennzeichnet,**
**dass** der Einsatztopf (20) am Außenboden (21) angeformte Abstandshalter (22) aufweist, die auf der Innenseite des Bodens (12) des Übertopfes (10) aufstehen und die Einstellposition des Einsatztopfes (10) im Übertopf (10) festlegen.

6. Pflanztopf-Anordnung nach einem der Ansprüche 1 bis 5,
**dadurch gekennzeichnet,**
**dass** der Tragrahmen (30) eine nach oben offene Nut (31) aufweist, in die ein nach unten weisender Steg (24) des Einsatztopfes (20) ragt und
**dass** durch Anschlag des Steges (24) in der Nut die obere Einhängestellung des Einsatztopfes (20) im Tragrahmen (30) mit dem Abdeckhalterahmen (40) festgelegt ist.

7. Pflanztopf-Anordnung nach Anspruch 6,
**dadurch gekennzeichnet,**
**dass** in der Einhängestellung der Tragrahmen (30) mit dem Abdeckrahmen (40) in der oberen Stellung des Tragrahmens (30) mit dem Abdeckhalterahmen (40) im Bezug zur Oberseite des Einsatztopfes (10) festgelegt ist.

8. Pflanztopf-Anordnung nach einem der Ansprüche 1 bis 7,
**dadurch gekennzeichnet**,
das der Tragrahmen (30) mit dem Abdeckhalterahmen (40) bei auf dem Boden (12) des Übertopfes (10) aufgestelltem Einsatztopfes (20) in die untere Stellung im Bezug auf den Einsatztopf (20) absenkbar ist, wobei der Tragrahmen (30) und/oder der Abdeckhalterahmen (40) sich auf der oberen Stirnseite des Übertopfes (10) oder auf einem Innenabsatz (45) des Einsatztopfes (20) abstützt.

9. Pflanztopf-Anordnung nach einem der Ansprüche 1 bis 8,
**dadurch gekennzeichnet,**
**dass** der Übertopf (10), der Einsatztopf (20), der Tragrahmen (30) und der Abdeckhalterahmen (40) aus Kunststoff bestehen, wobei der Übertopf (10) größere Wandstärke aufweist.

10. Pflanztopf-Anordnung nach einem der Ansprüche 2 bis 9,
**dadurch gekennzeichnet,**
**dass** der Abdeckhalterahmen (40) auf den Tragrahmen (30) aufgerastet ist.

## Claims

1. Plant pot arrangement with a plant pot (20) with potting soil intended to receive a plant, and that can be inserted and removed from a cachepot (10), wherein the cachepot (10) and the plant pot (20) are designed to be open at the top,
wherein the cachepot (10) has handle recesses (11) at the top,
**characterised in that**,
- the plant pot (20) can be suspended in a supporting frame (30),
- after insertion into the cachepot (10), the plant pot (20) rests on the bottom (12) of the cachepot (10), wherein the said suspended position of the plant pot (10) can be cancelled by lowering the support frame (30) to a lower position on the plant pot (20), while the support frame (30) can be stored on the upper side of the cachepot (10), and
- the support frame (30) can be held via the handle recesses (11) of the cachepot (10), and the plant pot (20) can be removed from the cachepot (10) after bringing the support frame (30) to the suspended position.

2. Plant pot arrangement according to claim 1,
**characterised in that**
the support frame (30) is limited in its vertical adjustment by a cover holding frame (40) that can be connected to the support frame (30) from the top of the plant pot (20) in the region of the top of the plant pot (20).

3. Plant pot arrangement according to claim 2,
**characterised in that**,
the vertical adjustment movement of the support frame (30) is limited by the cover holding frame (40) to at least the dimension of a hand (50) inserted between this unit and the top of the cachepot (10).

4. Plant pot arrangement according to one of the claims 1 to 3,
**characterised in that**
the cachepot (10), the plant pot (20), the support frame (30) and the cover holding frame (40) have a round, square, rectangular or oval cross-section, wherein the individual cross-sections match one another.

5. Plant pot arrangement according to one of the claims 1 to 4,
**characterised in that**
the plant pot (20) has an integrally-formed spacer (22) on its outer base (21) which rests on the inside of the base (12) of the cachepot (10) and determines the adjusted position of the plant pot (10) in the cachepot (10).

6. Plant pot arrangement according to one of the claims 1 to 5,
**characterised in that**
- the support frame (30) has an upwardly open groove (31) into which a downwardly pointing web (24) of the plant pot (20) protrudes, and
- by abutment of the web (24) in the groove, the upper suspended position of the plant pot (20) is determined in the support frame (30) with the cover holding frame (40).

7. Plant pot arrangement according to claim 6,
**characterised in that**
the suspended position of the support frame (30) in the upper position of the support frame (30) with the cover holding frame (40) is determined with respect to the upper side of the plant pot (10).

8. Plant pot arrangement according to one of the claims 1 to 7,
**characterised in that**
the said support frame (30) with the cover holding frame (40) can be lowered to the lower abutment position with respect to the plant pot (20) when the plant pot (20) is on the base (12) of the cachepot (10), wherein the support frame (30) and/or the cover holding frame (40) is supported on the upper end face of the cachepot (10) or on an inner shoulder (45) of the plant pot (20).

9. Plant pot arrangement according to one of the claims 1 to 8,
**characterised in that**
the cachepot (10), the plant pot (20), the support frame (30) and the cover holding frame (40) are made of plastic, wherein the cachepot (10) has a greater wall thickness.

10. Plant pot arrangement according to one of the claims 2 to 9,
**characterised in that**
the cover holding frame (40) is clipped onto the support frame (30).

## Revendications

1. Dispositif de pot de plante avec un cache-pot (10) et un pot amovible (20) pouvant être inséré dans le cache-pot (10) et extrait du cache-pot (10), pour le logement d'une plante avec de la terre végétale, le cache-pot (10) et le pot amovible (20) étant conçus de manière ouverte en haut,
le cache-pot (10) comprenant, au niveau du côté supérieur, des évidements de préhension (11),
**caractérisé en ce que**
le pot amovible (20) peut être suspendu dans un châssis de support (30),
le pot amovible (20) repose, après l'insertion dans le cache-pot (10), sur le fond (12) du cache-pot (10), la position de suspension du pot amovible (10) pouvant être élevée en abaissant le châssis de support (30) vers une position basse sur le pot amovible (20) et le châssis de support (30) pouvant être posé sur le côté supérieur du cache-pot (10) et
le châssis de support (30) peut être saisi par l'intermédiaire des évidements de préhension (11) du cache-pot (10) et le pot amovible (20) peut être extrait du cache-pot (10) après avoir amené le châssis de support (30) dans la position de suspension.

2. Dispositif de pot de plante selon la revendication 1,
**caractérisé en ce que**
le châssis de support (30) peut être réglé verticalement de manière limitée par un châssis de maintien de recouvrement (40), qui peut être relié avec le châssis de support (30) par le côté supérieur du pot amovible (20), au niveau du côté supérieur du pot amovible (20).

3. Dispositif de pot de plante selon la revendication 2,
**caractérisé en ce que**
le mouvement de réglage vertical du châssis de support (30) avec le châssis de maintien de recouvrement (40) à au moins les dimensions d'une main (50) insérée entre cette unité et le côté supérieur du cache-pot (10).

4. Dispositif de pot de plante selon l'une des revendications 1 à 3,
**caractérisé en ce que**
le cache-pot (10), le pot amovible (20), le châssis de support (30) et le châssis de maintien de recouvrement (40) présentent une section transversale ronde, carrée, rectangulaire ou ovale, les différentes sections transversales étant adaptées entre elles.

5. Dispositif de pot de plante selon l'une des revendications 1 à 4,
**caractérisé en ce que**
le pot amovible (20) comprend, au niveau du fond extérieur (21), des entretoises moulées (22), qui sont debout à l'intérieur du fond (12) du cache-pot (10) et qui bloquent la position de réglage du pot amovible (20) dans le cache-pot (10).

6. Dispositif de pot de plante selon l'une des revendications 1 à 5,
**caractérisé en ce que**
le châssis de support (30) présente une rainure (31) ouverte vers le haut, dans laquelle dépasse une nervure (24), pointant vers le bas, du pot amovible (20) et
la butée de la nervure (24) dans la rainure permet de bloquer la position de suspension du pot amovible (20) dans le châssis de support (30) avec le châssis de maintien de recouvrement (40).

7. Dispositif de pot de plante selon la revendication 6,
**caractérisé en ce que**
dans la position de suspension, le châssis de support (30) est bloqué, avec le châssis de recouvrement (40), dans la position supérieure du châssis de support (30) avec le châssis de maintien de recouvrement (40) par rapport au côté supérieur du pot amovible (10).

8. Dispositif de pot de plante selon l'une des revendications 1 à 7,
**caractérisé en ce que**
le châssis de support (30), avec le châssis de maintien de recouvrement (40), peut être abaissé, lorsque le pot amovible (20) est posé sur le fond (12) du cache-pot (10), vers la position basse par rapport au pot amovible (20), le châssis de support (30) et/ou le châssis de maintien de recouvrement (40) s'appuyant sur le côté frontal supérieur du cache-pot (10) ou sur un épaulement interne (45) du pot amovible (20).

9. Dispositif de pot de plante selon l'une des revendications 1 à 8,
**caractérisé en ce que**
le cache-pot (10), le pot amovible (20), le châssis de support (30) et le châssis de maintien de recouvrement (40) est constitué de matière plastique, le cache-pot (10) présentant une épaisseur de paroi plus importante.

10. Dispositif de pot de plante selon l'une des revendications 2 à 9,
**caractérisé en ce que**
le châssis de maintien de recouvrement (40) est encliqueté sur le châssis de support (30).
